# EUROPÄISCHE PATENTANMELDUNG

(11) **EP 4 837 760 A1**
(43) Veröffentlichungstag der Anmeldung: **11.11.2026**
(21) Anmeldenummer: 25174710.1
(22) Anmeldetag: 07.05.2025
(51) Int. Cl.: B60K 1/04

(54) **KRAFTFAHRZEUG MIT EINER HOCHVOLTBATTERIE**

(71) Anmelder: MAGNA STEYR Fahrzeugtechnik GmbH & Co KG, 8041 Graz (AT)
(72) Erfinder: HOFER, Bernhard, 8053 Graz (AT); SACKL, Karin, 8076 Vasoldsberg (AT)
(74) Vertreter: Zangger, Bernd

(57) **Zusammenfassung**

Ein Kraftfahrzeug mit einer Hochvoltbatterie (1), wobei die Hochvoltbatterie (1) unterhalb einer Bodenstruktur (2) des Kraftfahrzeugs angeordnet ist, wobei die Hochvoltbatterie (1) Batteriemodule (3) in einem Batteriegehäuse (4) umfasst, wobei sich die Hochvoltbatterie (1) in Draufsicht auf das Kraftfahrzeug über einen vordefinierten Fußraumbereich (5) des Kraftfahrzeugs erstreckt, der für das Abstellen von Füßen von Fahrzeugpassagieren vorgesehen ist, wobei in dem vordefinierten Fußraumbereich (5) kein Batteriemodul im Batteriegehäuse (4) angeordnet ist, wobei eine oben liegende Begrenzungswand (6) des Batteriegehäuses (4) im vordefinierten Fußraumbereich (5) eine Einbuchtung nach unten aufweist zur Ausbildung einer Aufnahmebucht (7) an der Oberseite der oben liegenden Begrenzungswand (6) des Batteriegehäuses (4), wobei zumindest ein elektrischer Anschluss (8) an der Aufnahmebucht (7) ausgebildet ist, der mit dem elektrischen Netz der Hochvoltbatterie (1) und/oder einem weiteren elektrischen Schaltkreis des Kraftfahrzeuges elektrisch verbunden ist, so dass wahlweise ein Zusatz-Batteriemodul (9) in der Aufnahmebucht (7) aufgenommen sein kann oder die Aufnahmebucht (7) als Fußgarage im vordefinierten Fußraumbereich (5) des Kraftfahrzeugs genutzt werden kann und ein Verfahren zum Umrüsten eines solchen Kraftfahrzeugs.

## Beschreibung

### Gebiet der Erfindung

Die vorliegende Erfindung betrifft ein Kraftfahrzeug mit einer Hochvoltbatterie sowie ein Verfahren zum Umrüsten eines solchen Kraftfahrzeugs.

### Stand der Technik

Es ist bekannt, dass Kraftfahrzeuge eine Hochvoltbatterie als Antriebsbatterie verwenden können, beispielsweise in Elektro- oder Hybridfahrzeugen. Um eine möglichst hohe Reichweite des Kraftfahrzeugs zu erreichen, werden Hochvoltbatterien mit möglichst großer Kapazität benötigt, wobei jedoch der benötigte Bauraum möglichst klein sein soll. Hochvoltbatterien werden daher beispielsweise als Flachspeicher ausgebildet und platzsparend unterhalb eines Fahrzeugbodens in einem Kraftfahrzeug angeordnet.

Batterieelektrisch betriebene Fahrzeuge, die ihre Batterie unter dem Fahrzeugboden tragen, weisen in manchen Fällen Fußgaragen für die Fondpassagiere auf, also Vertiefungen im Fahrzeugboden, die zum Abstellen der Füße von Passagieren auf Sitzplätzen im Fahrzeug ausgebildet sind, um die Sitzposition möglichst ergonomisch zu gestalten und die Fahrzeughöhe dabei niedrig zu halten. Durch die Vertiefung des Fahrzeugbodens im Bereich der Fußgarage können an dieser Stelle keine Batteriezellen untergebracht werden, da der Bauraum dafür nicht gegeben ist, womit die Kapazität der Batterie und die Reichweite des Kraftfahrzeugs eingeschränkt wird.

### Zusammenfassung der Erfindung

Es ist eine Aufgabe der Erfindung, ein Kraftfahrzeug mit einer Hochvoltbatterie anzugeben, wobei das Kraftfahrzeug flexibel an einen Kundenbedarf nach einer hohen Reichweite des Kraftfahrzeugs und/oder erhöhter Batteriekapazität oder einer verbesserten Ergonomie für Fahrzeugpassagiere angepasst werden kann.

Eine weitere Aufgabe ist es, ein Verfahren zum Umrüsten eines solchen Kraftfahrzeugs anzugeben, um das Kraftfahrzeug einfach und flexibel an einen Kundenbedarf nach einer hohen Reichweite des Kraftfahrzeugs und/oder erhöhter Batteriekapazität oder einer verbesserten Ergonomie für Fahrzeugpassagiere anpassen zu können.

Die Lösung der Aufgabe erfolgt durch ein Kraftfahrzeug mit einer Hochvoltbatterie, wobei die Hochvoltbatterie unterhalb einer Bodenstruktur des Kraftfahrzeugs angeordnet ist, wobei die Hochvoltbatterie Batteriemodule in einem Batteriegehäuse umfasst, wobei die Batteriemodule über elektrische Verbindungen mit einem elektrischen Netz der Hochvoltbatterie elektrisch verbunden sind, wobei sich die Hochvoltbatterie in Draufsicht auf das Kraftfahrzeug über einen vordefinierten Fußraumbereich des Kraftfahrzeugs erstreckt, der für das Abstellen von Füßen von Fahrzeugpassagieren vorgesehen ist, wobei in dem vordefinierten Fußraumbereich kein Batteriemodul im Batteriegehäuse angeordnet ist, wobei eine oben liegende Begrenzungswand des Batteriegehäuses im vordefinierten Fußraumbereich eine Einbuchtung nach unten aufweist zur Ausbildung einer Aufnahmebucht an der Oberseite der oben liegenden Begrenzungswand des Batteriegehäuses, wobei zumindest ein elektrischer Anschluss an der Aufnahmebucht ausgebildet ist, der mit dem elektrischen Netz der Hochvoltbatterie und/oder einem weiteren elektrischen Schaltkreis des Kraftfahrzeuges elektrisch verbunden ist, so dass wahlweise ein Zusatz-Batteriemodul in der Aufnahmebucht aufgenommen sein kann und über den elektrischen Anschluss mit dem elektrischen Netz der Hochvoltbatterie und/oder einem weiteren elektrischen Schaltkreis des Kraftfahrzeuges elektrisch verbunden ist oder die Aufnahmebucht als Fußgarage im vordefinierten Fußraumbereich des Kraftfahrzeugs genutzt werden kann.

Erfindungsgemäß ist in einem Kraftfahrzeug mit einer flachen Hochvoltbatterie unterhalb einer Bodengruppe des Kraftfahrzeugs in einem sich in der XY-Ebene erstreckenden Bereich, der für das Abstellen der Füße eines Passagiers des Kraftfahrzeugs vorgesehen ist, in diesem ausgewählten Bereich - im Gegensatz zu anderen Bereichen der Hochvoltbatterie - kein Batteriemodul im Batteriegehäuse angeordnet. In das Batteriegehäuse ist vielmehr eine Aufnahmebucht in die oben liegende Begrenzungswand des Batteriegehäuses geformt, so dass an der Oberseite der Hochvoltbatterie ein freier Platz vorhanden ist. Dieser freie Platz kann nun wahlweise als Fußgarage, also als abgesenkter Bereich für erhöhte Beinfreiheit eines Passagiers verwendet werden, oder es kann ein Batteriemodul an dieser Stelle - somit außerhalb des Batteriegehäuses - platziert werden und über einen dafür bereits vorgesehenen elektrischen Anschluss mit der Elektrik der übrigen Batteriemodule und/oder einem anderen Stromkreis im Kraftfahrzeug verschaltet werden. Vorteilhafterweise ist ebenso ein Anschluss an ein Kühlsystem der Hochvoltbatterie bereits vorgesehen. Das oder die außen liegenden Batteriemodule, also das oder die Zusatz-Batteriemodule in der Aufnahmebucht, bildet somit ein nachträglich ergänztes Batteriemodul derselben Hochvoltbatterie und ergänzen deren Kapazität oder stellt Kapazität für einen weiteren Stromkreis zur Verfügung. Der Einbau eines Zusatz-Batteriemoduls und der Ausbau eines Zusatz-Batteriemoduls kann jederzeit nach dem Kauf, beispielsweise auf einfache Weise in einer Werkstatt, erfolgen, da das Kraftfahrzeug für die Umrüstung vorbereitet ist.

Die Erfindung bietet somit die Möglichkeit für den Kunden, sich nach dem Kauf des Fahrzeuges für eine höhere Batteriekapazität entscheiden zu können. So kann eine nachträgliche Anpassung entsprechend der Nutzung bzw. des Kundenwunsches erfolgen. Eine nachträgliche Anpassung des Kraftfahrzeugs an sich ändernde Kundenbedürfnisse, durch Installation eines zusätzlichen Batteriepaketes anstelle einer Fußgarage insbesondere für Fondpassagiere oder umgekehrt ist möglich.

Das wahlweise Zusatz-Batteriemodul kann beispielsweise einem weiteren Stromkreis im Fahrzeug elektrisch verbunden sein, insbesondere eine Kapazitätserweiterung für den weiteren Stromkreis ausbilden. Der andere Stromkreis kann beispielsweise ein 12, 24 oder 48 Volt Bordnetz oder eine Spannungsversorgung für Campingzwecke sein. Das Zusatz-Batteriemodul kann dann nicht oder nicht direkt mit der Hochvoltbatterie elektrisch verbunden sein. Das Zusatz-Batteriemodul kann beispielsweise zwar als Speichererweiterung für die Antriebsenergie zur Verfügung stehen, jedoch über den elektrischen Anschluss nicht mit der Hochvoltbatterie in direktem Kontakt stehen, sondern die Energie direkt an eine Leistungselektronik zum Zwecke des Antriebes zur Verfügung stellen. Hierdurch ist beispielsweise bei Defekt der Antriebsbatterie ein unabhängiges, alternatives Antriebs-Batteriesystem vorrätig.

Weiterbildungen der Erfindung sind in den abhängigen Ansprüchen, der Beschreibung sowie den beigefügten Zeichnungen angegeben.

Vorzugsweise sind die Batteriemodule mit einem Kühlsystem zur Kühlung der Batteriemodule verbunden, wobei zumindest ein Kühl-Anschluss an der Aufnahmebucht ausgebildet ist, der mit dem Kühlsystem der Hochvoltbatterie verbunden ist, so dass ein wahlweise in der Aufnahmebucht aufgenommenes Zusatz-Batteriemodul über den Kühl-Anschluss mit dem Kühlsystem der Hochvoltbatterie verbunden ist. Das Kühlsystem kann beispielsweise ein Kühlfluid zur Kühlung der Batteriemodule verwenden. Am vorbereiteten Kühl-Anschluss in der Aufnahmebucht kann dann das Kühlfluid in das Zusatz-Batteriemodul strömen.

Bevorzugt weist die Bodenstruktur des Kraftfahrzeugs im Bereich der Aufnahmebucht ein abnehmbares Bodenstrukturbauteil auf, wobei das abnehmbare Bodenstrukturbauteil bevorzugt eine Einbuchtung nach unten aufweist, so dass das Bodenstrukturbauteil im Wesentlichen an die Aufnahmebucht der Hochvoltbatterie angepasst ist, also in die Aufnahmebucht hineinreicht und somit an dessen oben liegender Außenseite ebenfalls eine Aufnahmebucht ausbildet, so dass die Aufnahmebucht im Bereich oberhalb des abnehmbaren Bodenstrukturbauteils als Fußgarage genutzt werden kann.

Das abnehmbare Bodenstrukturbauteil ist vorzugsweise mittels einer Dichtung und mittels Befestigungselementen, beispielsweise Schrauben, dicht und lösbar an der übrigen Bodenstruktur des Kraftfahrzeugs befestigt.

Das Zusatz-Batteriemodul kann an dessen Oberseite die Bodenstruktur des Kraftfahrzeugs im Bereich der Aufnahmebucht selbst ausbilden, so dass das Zusatz-Batteriemodul das abnehmbare Bodenstrukturbauteil ersetzt. Eine zusätzliche Abdeckung oberhalb des Zusatz-Batteriemoduls ist dann nicht erforderlich. Die Oberseite des Zusatz-Batteriemoduls kann dann bevorzugt dicht an der übrigen Bodenstruktur befestigt sein.

Bevorzugt weist die Bodenstruktur des Kraftfahrzeugs im Bereich der Aufnahmebucht, bei in der Aufnahmebucht eingesetztem Zusatz-Batteriemodul, ein abnehmbares Deckel-Bodenstrukturbauteil auf, wobei das Deckel-Bodenstrukturbauteil keine wesentliche Einbuchtung nach unten aufweist, sondern im Wesentlichen flach ausgebildet ist, wobei das Deckel-Bodenstrukturbauteil das Zusatz-Batteriemodul oben abdeckt. Das Deckel-Bodenstrukturbauteil kann also als Abgrenzung des Zusatz-Batteriemoduls zum Fahrzeug-Innenraum hin verwendet werden, als Ersatz für das abnehmbare Bodenstrukturbauteil wenn ein Zusatz-Batteriemodul in der Aufnahmebucht aufgenommen ist. Das Deckel-Bodenstrukturbauteil ist deutlich flacher als das abnehmbare Bodenstrukturbauteil.

Der vordefinierte Fußraumbereich des Kraftfahrzeugs ist bevorzugt zumindest ein Teilbereich des Fußraums für Fondpassagiere des Kraftfahrzeugs.

Bevorzugt hat das Zusatz-Batteriemodul, das wahlweise in der Aufnahmebucht aufgenommen sein kann, etwa dieselbe Größe wie die Batteriemodule im Batteriegehäuse. Die Aufnahmebucht weist bevorzugt eine Höhe von mehr als 50% der Höhe des Batteriegehäuses im Bereich der Batteriemodule auf, vorzugsweise mehr als 80% der Höhe des Batteriegehäuses im Bereich der Batteriemodule.

Die Aufnahmebucht kann dazu ausgebildet sein, dass zumindest zwei Zusatz-Batteriemodule in der Aufnahmebucht, in Kraftfahrzeug-Querrichtung nebeneinander liegend, aufgenommen sein können. Die zumindest zwei Zusatz-Batteriemodule können beispielsweise in einem gemeinsamen Zusatz-Batteriemodul-Gehäuse angeordnet sein und/oder können denselben elektrischen Anschluss und/oder denselben Kühl-Anschluss in der Aufnahmebucht verwenden. Alternativ können in der Aufnahmebucht zumindest zwei elektrische Anschlüsse und bevorzugt zumindest zwei Kühl-Anschlüsse ausgebildet sein, so dass zumindest zwei Zusatz-Batteriemodule in der Aufnahmebucht jeweils mit dem elektrischen Netz der Hochvoltbatterie elektrisch verbunden sein können, bevorzugt auch jeweils mit dem Kühlsystem der Hochvoltbatterie verbunden sein können.

Ein erfindungsgemäßes Verfahren zum Umrüsten eines Kraftfahrzeugs, wie zuvor beschrieben, kann vorsehen, dass das abnehmbare Bodenstrukturbauteil von der übrigen Bodenstruktur abgenommen wird, dass danach das Zusatz-Batteriemodul in die Aufnahmebucht eingesetzt wird, dass vor, während oder nach dem Einsetzen des Zusatz-Batteriemoduls in die Aufnahmebucht, das Zusatz-Batteriemodul mit dem elektrischen Anschluss elektrisch verbunden wird und somit mit dem elektrischen Netz der Hochvoltbatterie elektrisch verbunden wird, wobei bevorzugt vor, während oder nach dem Einsetzen des Zusatz-Batteriemoduls in die Aufnahmebucht, das Zusatz-Batteriemodul mit dem Kühl-Anschluss verbunden wird und somit mit dem Kühlsystem der Hochvoltbatterie verbunden wird. Die Verbindung mit dem elektrischen Anschluss und/oder mit dem Kühl-Anschluss kann beispielsweise automatisch durch das Einsetzen des Zusatz-Batteriemoduls in die Aufnahmebucht erfolgen. Wahlweise kann nach dem Einsetzen und Herstellen der Verbindungen mit den Anschlüssen ein Deckel-Bodenstrukturbauteil als Deckel oberhalb des Zusatz-Batteriemoduls angeordnet werden und bevorzugt mit der übrigen Bodenstruktur mechanisch verbunden werden, vorzugsweise dicht verbunden.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines erfindungsgemäßen Kraftfahrzeugs im Bereich der Hochvoltbatterie, in einem Zustand, in dem die Aufnahmebucht als Fußgarage genutzt wird.
- Fig. 2: ist eine schematische Schnittansicht des Kraftfahrzeugs gemäß Fig. 1 im Bereich der Hochvoltbatterie, in einem Zustand, in dem die Aufnahmebucht zur Aufnahme eines Zusatz-Batteriemoduls genutzt wird.
- Fig. 3: ist eine schematische Schnittansicht des Zusatz-Batteriemoduls des Kraftfahrzeugs gemäß Fig. 2.

### Detaillierte Beschreibung der Erfindung

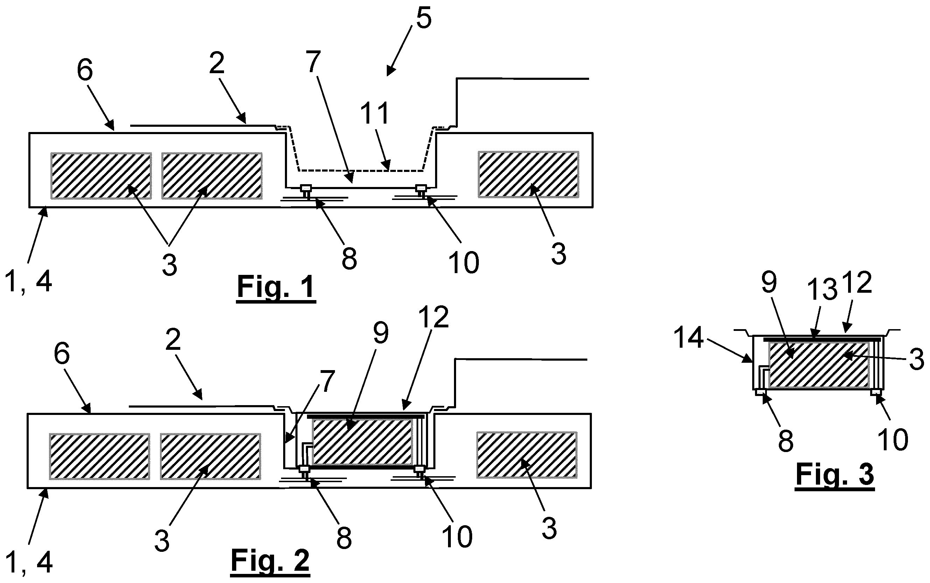

In der Fig. 1 ist ein erfindungsgemäßes Kraftfahrzeug im Bereich der Hochvoltbatterie 1 in einem Zustand dargestellt, in dem eine Aufnahmebucht 7 der Hochvoltbatterie 1 als Fußgarage genutzt wird. Das selbe Kraftfahrzeug ist in Fig. 2 in einem Zustand dargestellt, in dem die Aufnahmebucht 7 der Hochvoltbatterie 1 zur Aufnahme eines Zusatz-Batteriemoduls 9 genutzt wird.

Die Hochvoltbatterie 1 ist unterhalb einer Bodenstruktur 2 des Kraftfahrzeugs angeordnet und umfasst mehrere Batteriemodule 3, mit jeweils einer Vielzahl von Batteriezellen, in einem Batteriegehäuse 4. Es können mehrere Batteriemodule 3 in Fahrzeuglängsrichtung nacheinander und in Fahrzeugquerrichtung nebeneinander angeordnet sein. Die Batteriemodule 3 sind über elektrische Verbindungen mit einem elektrischen Netz der Hochvoltbatterie 1 elektrisch verbunden, so dass vom elektrischen Netz der Hochvoltbatterie ein gemeinsamer externer elektrischer Anschluss der Hochvoltbatterie zur Verfügung gestellt wird. Die Hochvoltbatterie 1 erstreckt sich in Draufsicht auf das Kraftfahrzeug über einen vordefinierten Fußraumbereich 5 des Kraftfahrzeugs, der für das Abstellen von Füßen von Fahrzeugpassagieren vorgesehen ist, insbesondere im allgemeinen Bereich des Fußraumes von Fondpassagieren.

In diesem vordefinierten Fußraumbereich 5 ist kein Batteriemodul im Batteriegehäuse 4 angeordnet, wobei eine oben liegende Begrenzungswand 6 des Batteriegehäuses 4 im vordefinierten Fußraumbereich 5 eine Einbuchtung nach unten aufweist zur Ausbildung einer Aufnahmebucht 7 an der Oberseite der oben liegenden Begrenzungswand 6 des Batteriegehäuses 4 und somit für eine "Aufnahme" eines Objektes außen an der Hochvoltbatterie 1.

Ein elektrischer Anschluss 8 ist an der Aufnahmebucht 7 ausgebildet, der mit dem elektrischen Netz der Hochvoltbatterie 1 elektrisch verbunden ist, so dass wahlweise - wie in Fig. 2 dargestellt - ein Zusatz-Batteriemodul 9 in der Aufnahmebucht 7 aufgenommen sein kann und über den elektrischen Anschluss 8 mit dem elektrischen Netz der Hochvoltbatterie 1 elektrisch verbunden sein kann. Wenn kein Zusatz-Batteriemodul 9 in der Aufnahmebucht 7 aufgenommen ist, kann - wie in Fig. 1 dargestellt - die Aufnahmebucht 7 als Fußgarage im vordefinierten Fußraumbereich 5 des Kraftfahrzeugs genutzt werden.

Die Batteriemodule 3 können auch mit einem Kühlsystem zur Kühlung der Batteriemodule 3 verbunden sein und ein Kühl-Anschluss 10 kann an der Aufnahmebucht 7 ausgebildet sein, der mit dem Kühlsystem der Hochvoltbatterie 1 verbunden ist, so dass ein wahlweise in der Aufnahmebucht 7 aufgenommenes Zusatz-Batteriemodul 9 über den Kühl-Anschluss 10 mit dem Kühlsystem der Hochvoltbatterie 1 verbunden ist.

Ein in einer Aufnahmebucht 7 aufgenommenes Zusatz-Batteriemodul 9 ist in Fig. 3 dargestellt. Das Zusatz-Batteriemodul 9 verwendet einen plattenförmigen Kühlkörper 13, der beispielsweise über ein Kühlfluid das am Kühl-Anschluss 10 in das Zusatz-Batteriemodul 9 strömen kann, die Batteriezellen des Zusatz-Batteriemoduls 9 kühlt.

Die Bodenstruktur 2 des Kraftfahrzeugs weist im Bereich der Aufnahmebucht 7 ein abnehmbares Bodenstrukturbauteil 11 auf, wobei das abnehmbare Bodenstrukturbauteil 11 eine Einbuchtung nach unten aufweist, so dass die Form des Bodenstrukturbauteils 11 im Wesentlichen an die Aufnahmebucht 7 der Hochvoltbatterie 1 angepasst ist, so dass die Aufnahmebucht 7 im Bereich oberhalb des abnehmbaren Bodenstrukturbauteils 11 als Fußgarage genutzt werden kann.

Das abnehmbare Bodenstrukturbauteil 11 ist mittels einer Dichtung und mittels Befestigungselementen, beispielsweise Schrauben, dicht und lösbar an der übrigen Bodenstruktur 2 des Kraftfahrzeugs befestigt.

Wie in Fig. 2 ersichtlich, weist die Bodenstruktur 2 des Kraftfahrzeugs im Bereich der Aufnahmebucht 7, bei in der Aufnahmebucht 7 eingesetztem Zusatz-Batteriemodul 9, ein abnehmbares Deckel-Bodenstrukturbauteil 12 auf, wobei das Deckel-Bodenstrukturbauteil 12 keine wesentliche Einbuchtung nach unten aufweist, so dass das Deckel-Bodenstrukturbauteil 12 das Zusatz-Batteriemodul 9 in der Art eines Deckels oben abdeckt. Die Oberseite des Deckel-Bodenstrukturbauteils 12 kann dann zum Abstellen der Füße von Passagieren des Kraftfahrzeugs genutzt werden, bildet jedoch keine Wesentlich nach unten ausgeformte Fußgarage aus.

Das Zusatz-Batteriemodul 9, das wahlweise in der Aufnahmebucht 7 aufgenommen sein kann, hat etwa dieselbe Größe wie die Batteriemodule 3 im Batteriegehäuse 4. Die Aufnahmebucht 7 hat eine Höhe von mehr als 70% der Höhe des Batteriegehäuses 4 im Bereich der Batteriemodule 3.

Es können mehrere Zusatz-Batteriemodule 9 in der Aufnahmebucht 7 aufgenommen sein. Die mehreren Zusatz-Batteriemodule 9 können beispielsweise in einem gemeinsamen Gehäuse 14 angeordnet sein und können sich denselben elektrischen Anschluss 8 und/oder Kühl-Anschluss 10 teilen oder jeweils eigene elektrische Anschlüsse 8 und/oder Kühl-Anschlüsse 10 verwenden.

In einem batterieelektrisch betriebenen Fahrzeug, das eine Batterie unter dem Fahrzeugboden trägt, kann somit wahlweise eine Fußgarage für die Fondpassagiere ausgebildet sein, um die Sitzposition ergonomisch zu gestalten und die Fahrzeughöhe niedrig zu halten. Dann werden an dieser Stelle keine Batteriezellen untergebracht, da der Bauraum dafür nicht gegeben ist, und die eingeschränkte Kapazität der Batterie wird in Kauf genommen. Die Erfindung bietet die Möglichkeit für den Kunden, sich nach dem Kauf des Fahrzeuges für eine höhere Batteriekapazität entscheiden zu können, wobei dann die unangenehmere Sitzposition für die Fondpassagiere in Kauf genommen wird. So kann eine nachträgliche Anpassung entsprechend der Nutzung bzw. des Kundenwunsches erfolgen. Die Erfindung beinhaltet somit ein nachträglich, bevorzugt in einer Fachwerkstatt, verbaubares Batteriepaket und die vorbereiteten Anschlüsse, wie elektrische Anschlüsse und eine Anbindung an die Batteriekühlung. Diese Schnittstellen sind bereits bei der Auslieferung des Fahrzeugs realisiert und werden beim Einbau eines Zusatz-Batteriemoduls aktiviert bzw. genutzt. Die Fußgarage in der Grundausstattung wird durch ein abnehmbares Bodenstrukturbauteil 11, insbesondere ein Montageteil, umgesetzt, das in den Fahrzeugboden dicht eingesetzt ist, und wieder lösbar ist, beispielsweise durch Verwendung einer Dichtung und einer Verschraubung. Im Bedarfsfall wird das abnehmbare Bodenstrukturbauteil 11 entfernt und ein Batteriemodul in die Ausnehmung eingesetzt, dessen Gehäuse 14 auch den Fahrzeugboden in der Ausnehmung bilden kann. Die Kontaktierungen der Anschlüsse können bevorzugt beim Einsetzen automatisch hergestellt werden. Alternativ werden die Anschlüsse bevorzugt vor dem Einsetzen verbunden, was vorzugsweise durch eine geeignete Überlänge der Leitungen ermöglicht wird. In einer anderen Alternative wird das Batteriemodul eingesetzt und im Anschluss daran die Verbindung der Leitungen hergestellt. Darauf erfolgt bevorzugt das Einsetzen eines separaten Deckels, also eines Deckel-Bodenstrukturbauteils 12, in die Ausnehmung bzw. in die Aufnahmebucht 7 am Fahrzeugboden.

### Bezugszeichenliste

- 1: Hochvoltbatterie
- 2: Bodenstruktur
- 3: Batteriemodule
- 4: Batteriegehäuse
- 5: Fußraumbereich
- 6: oben liegende Begrenzungswand
- 7: Aufnahmebucht
- 8: elektrischer Anschluss
- 9: Zusatz-Batteriemodul
- 10: Kühl-Anschluss
- 11: abnehmbares Bodenstrukturbauteil
- 12: Deckel-Bodenstrukturbauteil
- 13: Kühlkörper
- 14: Gehäuse des Zusatz-Batteriemoduls

## Patentansprüche

1. Kraftfahrzeug mit einer Hochvoltbatterie (1), wobei die Hochvoltbatterie (1) unterhalb einer Bodenstruktur (2) des Kraftfahrzeugs angeordnet ist, wobei die Hochvoltbatterie (1) Batteriemodule (3) in einem Batteriegehäuse (4) umfasst, wobei die Batteriemodule (3) über elektrische Verbindungen mit einem elektrischen Netz der Hochvoltbatterie (1) elektrisch verbunden sind, wobei sich die Hochvoltbatterie (1) in Draufsicht auf das Kraftfahrzeug über einen vordefinierten Fußraumbereich (5) des Kraftfahrzeugs erstreckt, der für das Abstellen von Füßen von Fahrzeugpassagieren vorgesehen ist, **dadurch gekennzeichnet , dass** in dem vordefinierten Fußraumbereich (5) kein Batteriemodul im Batteriegehäuse (4) angeordnet ist, wobei eine oben liegende Begrenzungswand (6) des Batteriegehäuses (4) im vordefinierten Fußraumbereich (5) eine Einbuchtung nach unten aufweist zur Ausbildung einer Aufnahmebucht (7) an der Oberseite der oben liegenden Begrenzungswand (6) des Batteriegehäuses (4), wobei zumindest ein elektrischer Anschluss (8) an der Aufnahmebucht (7) ausgebildet ist, der mit dem elektrischen Netz der Hochvoltbatterie (1) und/oder einem weiteren elektrischen Schaltkreis des Kraftfahrzeuges elektrisch verbunden ist, so dass wahlweise ein Zusatz-Batteriemodul (9) in der Aufnahmebucht (7) aufgenommen sein kann und über den elektrischen Anschluss (8) mit dem elektrischen Netz der Hochvoltbatterie (1) und/oder einem weiteren elektrischen Schaltkreis des Kraftfahrzeuges elektrisch verbunden ist oder die Aufnahmebucht (7) als Fußgarage im vordefinierten Fußraumbereich (5) des Kraftfahrzeugs genutzt werden kann.

2. Kraftfahrzeug nach Anspruch 1,
**dadurch gekennzeichnet , dass** die Batteriemodule (3) mit einem Kühlsystem zur Kühlung der Batteriemodule (3) verbunden sind, wobei zumindest ein Kühl-Anschluss (10) an der Aufnahmebucht (7) ausgebildet ist, der mit dem Kühlsystem der Hochvoltbatterie (1) verbunden ist, so dass ein wahlweise in der Aufnahmebucht (7) aufgenommenes Zusatz-Batteriemodul (9) über den Kühl-Anschluss (10) mit dem Kühlsystem der Hochvoltbatterie (1) verbunden ist.

3. Kraftfahrzeug nach zumindest einem der vorhergehenden Ansprüche,
**dadurch gekennzeichnet , dass** die Bodenstruktur (2) des Kraftfahrzeugs im Bereich der Aufnahmebucht (7) ein abnehmbares Bodenstrukturbauteil (11) aufweist, wobei das abnehmbare Bodenstrukturbauteil (11) bevorzugt eine Einbuchtung nach unten aufweist, so dass die Form des Bodenstrukturbauteils (11) im Wesentlichen an die Aufnahmebucht (7) der Hochvoltbatterie (1) angepasst ist, so dass die Aufnahmebucht (7) im Bereich oberhalb des abnehmbaren Bodenstrukturbauteils (11) als Fußgarage genutzt werden kann.

4. Kraftfahrzeug nach Anspruch 3,
**dadurch gekennzeichnet , dass** das abnehmbare Bodenstrukturbauteil (11) mittels einer Dichtung und mittels Befestigungselementen, beispielsweise Schrauben, dicht und lösbar an der übrigen Bodenstruktur (2) des Kraftfahrzeugs befestigt ist.

5. Kraftfahrzeug nach Anspruch 3 oder 4,
**dadurch gekennzeichnet , dass** das Zusatz-Batteriemodul (9) an dessen Oberseite die Bodenstruktur (2) des Kraftfahrzeugs im Bereich der Aufnahmebucht (7) ausbildet, so dass das Zusatz-Batteriemodul (9) das abnehmbare Bodenstrukturbauteil (11) ersetzt.

6. Kraftfahrzeug nach Anspruch 3 oder 4,
**dadurch gekennzeichnet , dass** die Bodenstruktur (2) des Kraftfahrzeugs im Bereich der Aufnahmebucht (7), bei in der Aufnahmebucht (7) eingesetztem Zusatz-Batteriemodul (9), ein abnehmbares Deckel-Bodenstrukturbauteil (12) aufweist, wobei das Deckel-Bodenstrukturbauteil (12) im Wesentlichen flach ausgebildet ist, wobei das Deckel-Bodenstrukturbauteil (12) das Zusatz-Batteriemodul (9) oben abdeckt.

7. Kraftfahrzeug nach zumindest einem der vorhergehenden Ansprüche,
**dadurch gekennzeichnet , dass** der vordefinierte Fußraumbereich (5) des Kraftfahrzeugs zumindest ein Teilbereich des Fußraums für Fondpassagiere des Kraftfahrzeugs ist.

8. Kraftfahrzeug nach zumindest einem der vorhergehenden Ansprüche,
**dadurch gekennzeichnet , dass** das Zusatz-Batteriemodul (9), das wahlweise in der Aufnahmebucht (7) aufgenommen sein kann, etwa dieselbe Größe hat wie die Batteriemodule (3) im Batteriegehäuse (4) und/oder dass die Aufnahmebucht (7) eine Höhe von mehr als 50% der Höhe des Batteriegehäuses (4) im Bereich der Batteriemodule (3) aufweist.

9. Kraftfahrzeug nach zumindest einem der vorhergehenden Ansprüche,
**dadurch gekennzeichnet , dass** die Aufnahmebucht (7) dazu ausgebildet ist, dass zumindest zwei Zusatz-Batteriemodule (9) in der Aufnahmebucht (7), in Kraftfahrzeug-Querrichtung nebeneinander liegend, aufgenommen sein können.

10. Verfahren zum Umrüsten eines Kraftfahrzeugs nach Anspruch 3 durch Ergänzen eines Zusatz-Batteriemoduls (9) für die Hochvoltbatterie (1) des Kraftfahrzeugs,
**dadurch gekennzeichnet , dass** das abnehmbare Bodenstrukturbauteil (11) von der übrigen Bodenstruktur (2) abgenommen wird, dass danach das Zusatz-Batteriemodul (9) in die Aufnahmebucht (7) eingesetzt wird, dass vor, während oder nach dem Einsetzen des Zusatz-Batteriemoduls (9) in die Aufnahmebucht (7), das Zusatz-Batteriemodul (9) mit dem elektrischen Anschluss (8) elektrisch verbunden wird und somit mit dem elektrischen Netz der Hochvoltbatterie (1) elektrisch verbunden wird, wobei bevorzugt vor, während oder nach dem Einsetzen des Zusatz-Batteriemoduls (9) in die Aufnahmebucht (7), das Zusatz-Batteriemodul (9) mit dem Kühl-Anschluss (10) verbunden wird und somit mit dem Kühlsystem der Hochvoltbatterie (1) verbunden wird.

## Geänderte Patentansprüche

### Geänderte Patentansprüche gemäss Regel 137(2) EPÜ.

1. Kraftfahrzeug mit einer Hochvoltbatterie (1), wobei die Hochvoltbatterie (1) unterhalb einer Bodenstruktur (2) des Kraftfahrzeugs angeordnet ist, wobei die Hochvoltbatterie (1) Batteriemodule (3) in einem Batteriegehäuse (4) umfasst, wobei die Batteriemodule (3) über elektrische Verbindungen mit einem elektrischen Netz der Hochvoltbatterie (1) elektrisch verbunden sind, wobei sich die Hochvoltbatterie (1) in Draufsicht auf das Kraftfahrzeug über einen vordefinierten Fußraumbereich (5) des Kraftfahrzeugs erstreckt, der für das Abstellen von Füßen von Fahrzeugpassagieren vorgesehen ist,
**dadurch gekennzeichnet, dass** in dem vordefinierten Fußraumbereich (5) kein Batteriemodul im Batteriegehäuse (4) angeordnet ist, wobei eine oben liegende Begrenzungswand (6) des Batteriegehäuses (4) im vordefinierten Fußraumbereich (5) eine Einbuchtung nach unten aufweist zur Ausbildung einer Aufnahmebucht (7) an der Oberseite der oben liegenden Begrenzungswand (6) des Batteriegehäuses (4), wobei zumindest ein elektrischer Anschluss (8) an der Aufnahmebucht (7) ausgebildet ist, der mit dem elektrischen Netz der Hochvoltbatterie (1) und/oder einem weiteren elektrischen Schaltkreis des Kraftfahrzeuges elektrisch verbunden ist, so dass wahlweise ein Zusatz-Batteriemodul (9) in der Aufnahmebucht (7) aufgenommen sein kann und über den elektrischen Anschluss (8) mit dem elektrischen Netz der Hochvoltbatterie (1) und/oder einem weiteren elektrischen Schaltkreis des Kraftfahrzeuges elektrisch verbunden ist.

2. Kraftfahrzeug nach Anspruch 1,
**dadurch gekennzeichnet , dass** die Batteriemodule (3) mit einem Kühlsystem zur Kühlung der Batteriemodule (3) verbunden sind, wobei zumindest ein Kühl-Anschluss (10) an der Aufnahmebucht (7) ausgebildet ist, der mit dem Kühlsystem der Hochvoltbatterie (1) verbunden ist, so dass ein wahlweise in der Aufnahmebucht (7) aufgenommenes Zusatz-Batteriemodul (9) über den Kühl-Anschluss (10) mit dem Kühlsystem der Hochvoltbatterie (1) verbunden ist.

3. Kraftfahrzeug nach zumindest einem der vorhergehenden Ansprüche,
**dadurch gekennzeichnet , dass** die Bodenstruktur (2) des Kraftfahrzeugs im Bereich der Aufnahmebucht (7) ein abnehmbares Bodenstrukturbauteil (11) aufweist, wobei das abnehmbare Bodenstrukturbauteil (11) bevorzugt eine Einbuchtung nach unten aufweist, so dass die Form des Bodenstrukturbauteils (11) im Wesentlichen an die Aufnahmebucht (7) der Hochvoltbatterie (1) angepasst ist, so dass die Aufnahmebucht (7) im Bereich oberhalb des abnehmbaren Bodenstrukturbauteils (11) als Fußgarage genutzt werden kann.

4. Kraftfahrzeug nach Anspruch 3,
**dadurch gekennzeichnet , dass** das abnehmbare Bodenstrukturbauteil (11) mittels einer Dichtung und mittels Befestigungselementen, beispielsweise Schrauben, dicht und lösbar an der übrigen Bodenstruktur (2) des Kraftfahrzeugs befestigt ist.

5. Kraftfahrzeug nach Anspruch 3 oder 4,
**dadurch gekennzeichnet , dass** das Zusatz-Batteriemodul (9) an dessen Oberseite die Bodenstruktur (2) des Kraftfahrzeugs im Bereich der Aufnahmebucht (7) ausbildet, so dass das Zusatz-Batteriemodul (9) das abnehmbare Bodenstrukturbauteil (11) ersetzt.

6. Kraftfahrzeug nach Anspruch 3 oder 4,
**dadurch gekennzeichnet , dass** die Bodenstruktur (2) des Kraftfahrzeugs im Bereich der Aufnahmebucht (7), bei in der Aufnahmebucht (7) eingesetztem Zusatz-Batteriemodul (9), ein abnehmbares Deckel-Bodenstrukturbauteil (12) aufweist, wobei das Deckel-Bodenstrukturbauteil (12) im Wesentlichen flach ausgebildet ist, wobei das Deckel-Bodenstrukturbauteil (12) das Zusatz-Batteriemodul (9) oben abdeckt.

7. Kraftfahrzeug nach zumindest einem der vorhergehenden Ansprüche,
**dadurch gekennzeichnet , dass** der vordefinierte Fußraumbereich (5) des Kraftfahrzeugs zumindest ein Teilbereich des Fußraums für Fondpassagiere des Kraftfahrzeugs ist.

8. Kraftfahrzeug nach zumindest einem der vorhergehenden Ansprüche,
**dadurch gekennzeichnet , dass** das Zusatz-Batteriemodul (9), das wahlweise in der Aufnahmebucht (7) aufgenommen sein kann, etwa dieselbe Größe hat wie die Batteriemodule (3) im Batteriegehäuse (4) und/oder dass die Aufnahmebucht (7) eine Höhe von mehr als 50% der Höhe des Batteriegehäuses (4) im Bereich der Batteriemodule (3) aufweist.

9. Kraftfahrzeug nach zumindest einem der vorhergehenden Ansprüche,
**dadurch gekennzeichnet , dass** die Aufnahmebucht (7) dazu ausgebildet ist, dass zumindest zwei Zusatz-Batteriemodule (9) in der Aufnahmebucht (7), in Kraftfahrzeug-Querrichtung nebeneinander liegend, aufgenommen sein können.

10. Verfahren zum Umrüsten eines Kraftfahrzeugs nach Anspruch 3 durch Ergänzen eines Zusatz-Batteriemoduls (9) für die Hochvoltbatterie (1) des Kraftfahrzeugs,
**dadurch gekennzeichnet , dass** das abnehmbare Bodenstrukturbauteil (11) von der übrigen Bodenstruktur (2) abgenommen wird, dass danach das Zusatz-Batteriemodul (9) in die Aufnahmebucht (7) eingesetzt wird, dass vor, während oder nach dem Einsetzen des Zusatz-Batteriemoduls (9) in die Aufnahmebucht (7), das Zusatz-Batteriemodul (9) mit dem elektrischen Anschluss (8) elektrisch verbunden wird und somit mit dem elektrischen Netz der Hochvoltbatterie (1) elektrisch verbunden wird, wobei bevorzugt vor, während oder nach dem Einsetzen des Zusatz-Batteriemoduls (9) in die Aufnahmebucht (7), das Zusatz-Batteriemodul (9) mit dem Kühl-Anschluss (10) verbunden wird und somit mit dem Kühlsystem der Hochvoltbatterie (1) verbunden wird.
